Europäisches Patentamt

(19) **European Patent Office**

**Office européen des brevets**

(11) Numéro de publication: **0 004 221**
**B1**

(12) **FASCICULE DE BREVET EUROPEEN**

(45) Date de publication du fascicule de brevet: **23.09.81**

(21) Numéro de dépôt: **79400113.1**

(22) Date de dépôt: **23.02.79**

(51) Int. Cl.³: **A 01 K 11/00, B 25 B 7/00**

(54) **Pince de marquage d'animaux par étiquettes perfectionnée.**

(30) Priorité: **03.03.78 FR 7806252**

(43) Date de publication de la demande:
**19.09.79 Bulletin 79/19**

(45) Mention de la délivrance du brevet:
**23.09.81 Bulletin 81/38**

(84) Etats Contractants Désignés:
**BE CH DE FR GB IT LU NL**

(56) Documents cités:
**DE - C - 692 236**

(73) Titulaire: **Noe Elevage Service Société anonyme dite:**
**7, rue Béziel**
**F-78120 Rambouillet (FR)**

(72) Inventeur: **Lefebvre, Marc**
**14, rue de la Sablière**
**F-78120 Rambouillet (FR)**

(74) Mandataire: **Rinuy, Guy**
**Cabinet Rinuy et Santarelli 14, Avenue de la Grande Armée**
**F-75017 Paris (FR)**

Courier Press, Leamington Spa, England.

## Pince de marquage d'animaux par étiquettes perfectionnée

La présente invention concerne une pince perfectionnée de marquage d'animaux par étiquettes ou boucles implantées dans une région cartilagineuse de leur corps, applicable plus spécialement à l'implantation desdites étiquettes sur les oreilles desdits animaux.

On sait que, depuis de nombreuses années déjà, les cheptels bovin, ovin, porcin, notamment, sont identifiés au moyen de boucles rigides constituées de deux éléments, l'un mâle et l'autre femelle, asemblés après perforation du cartilage de l'oreille au moyen d'une pince prévue à cet effet. Les pinces destinées à l'implantation de telles étiquettes peuvent être d'une construction simple, compte-tenu de la rigidité des étiquettes qu'elles permettent de mettre en place et qui portent la marque distinctive propre à l'animal; elles ne nécessitent généralement pas de guide pour leur mise en place correcte. Toutefois, si ce type de boucles rigides réalisées généralement en métal ou en produit synthétique rigide tel que, par exemple, du "Rilsan" ou du "Nylon" (marques déposées), a l'avantage de pouvoir être posé rapidement, il se trouve à l'origine d'une proportion de pertes élevées puisqu'on peut l'évaluer à une valeur comprise entre 20% et 40% par an, selon les espèces et/ou le mode d'élevage.

On connaît déjà d'après le brevet allemand DE - C - 692 236 une pince de marquage destinée à mettre en place des étiquettes métalliques rigides en une seule pièce, en forme d'étrier, dont les extrémités, initialement libres, des branches sont assemblées entre elles par rivetage de l'extrémité libre recourbée à cet effet, de la première de ces deux branches sur l'extrémité libre de la seconde. A cet effet, le mors fixe de la pince comporte une masselotte à très faible débattement angulaire qui a pour fonction de servir d'enclume lors de l'opération de rivetage des extrémités libres de l'étiquette. Les faces internes des mâchoires de la pince passent d'une position initiale en forme de V à une position finale en forme de U, après l'opération de rivetage.

Depuis quelques années des boucles souples réalisées en élastomère et en une seule pièce sont apparues sur le marché. Ces boucles souples ont apporté une nette amélioration par rapport aux boucles rigides, puisque leur emploi a permis de ramener la proportion de pertes annuelles à des valeurs comprises entre 5% et 15% et avec, en outre, un nombre moindre d'oreilles fendues. Bien que la surface de telles boucles soit relativement importante et permette d'y placer des caractères de trente à quarante millimètres de hauteur, permettant ainsi une appréciation à distance des signes d'identification de l'animal, leur teneur s'avère satisfaisante étant donné qu'en raison de leur souplesse elles sont moins vulnérables aux différentes aspérités auxquelles elles sont susceptibles de s'accrocher, par exemple dans les bâtiments ou sur les clôtures.

Cependant, de telles étiquettes présentent, en ce qui concerne leur pose, de graves inconvénients dus au fait que jusque maintenant on ne les posait qu'au moyen d'un trocart qui, outre le fait qu'il risquait de blesser l'opérateur au moment de la pose, du fait des réactions de l'animal, fendait le cartilage de l'animal sur une longueur de 12 à 18 mm, la fente correspondante s'agrandissant rapidement au fur et à mesure de la croissance dudit animal. Il en résulte que ce type d'étiquettes constituées en une seule pièce provoque une proportion de pertes plus importante chez les jeunes animaux que chez les animaux adultes dont le développement de l'oreille est achevé. Or, il est clair que l'intérêt des opérations de marquage est de parvenir à distinguer et à identifier les animaux dès leur plus jeune âge; aussi a-t-on cherché un palliatif aux inconvénients précités. C'est ainsi que des étiquettes souples en polyuréthane réalisées en deux pièces assemblées entre elles au moyen d'un axe de diamètre réduit aux environs de quatre millimètres traversant le cartilage de l'animal et dont la pose est effectuée au moyen d'une pince, ont fait leur apparition sur le marché, telles que par exemple l'étiquette faisant l'objet de la demande de brevet français N° FR - A - 2 363 987 du 13 septembre 1976 au nom de la Demanderesse. Pour permettre l'obtention de ce résultat et une pose correcte, on a été amené à construire des pinces présentant un certain nombre de caractéristiques; c'est ainsi que l'on a été amené à concevoir des pinces dont les mâchoires demeurent parallèles entre elles à la fermeture et en position de serrage; dans ce type de pinces, l'un des mors doit être muni d'un guide rigide sur lequel on met en position l'axe porté par l'une des deux parties de l'étiquette et qui est appelée pour cette raison partie mâle, cette rigidité étant rendue nécessaire du fait que, sans elle, la matière souple se repousserait et ne traverserait ni le cartilage ni la partie femelle pour s'y verrouiller. Cet axe de la partie mâle long de 25 à 30 mm est conçu pour être ajusté au guide porté par le mors de la pince. L'amorce de la percée est obtenue, suivant les cas, soit par une aiguille métallique faisant partie intégrante du guide rigide, soit par un pointeau de forme conique réalisé en une matière rigide tel que du métal, un polyuréthane dur ou un polyamide dur. Les pinces de mise en place de telles étiquettes souples actuellement connues ont pour inconvénient majeur la difficulté de se libérer de part en part de l'oreille une fois l'étiquette posée. Bien souvent, du fait des réactions de l'animal, l'operateur n'a pas le temps de réouvrir suffisamment tôt la pince, qui alors tirée par l'animal, en même temps qu'elle lui échappe de la main agrandit la fente effectuée dans l'oreille dudit animal sous l'effet de la traction de l'animal qui, instinctivement, cherchant à se libérer, exerce cette traction. Il en résulte que la pérennité de la marque se trouve compromise à plus ou moins long terme.

A une époque relativement récente, on a vu apparaître sur le marché des pinces plus perfectionnées comportant un moyen de déchenchement automatique accompagné d'un écartement limité d'un mors de la pince en fin de course, qui simplifie relativement la pose. Néanmoins l'angle de l'ouverture de la tige guide, dans de telles pinces, s'avère tout à fait insuffisant pour libérer en temps utile la partie mâle de l'étiquette. En outre, sur de telles pinces, la tige guide doit être changée fréquemment car elle ne se trouve jamais dans la position idéale qui permettrait de libérer sans effort l'étiquette une fois posée.

La présente invention obvie à ces inconvénients en fournissant une pince de marquage d'animaux par étiquette implantée dans une région cartilagineuse de leur corps, permettant la libération des deux éléments de l'étiquette dès la première réaction de l'animal et du fait même de cette réaction, et dans laquelle la tige guide de la partie mâle de l'étiquette se place d'elle-même suivant l'angle d'ouverture souhaité pour laisser échapper l'axe de la partie mâle une fois l'étiquette posée.

La pince de marquage d'animaux par étiquettes implantées dans une région cartilagineuse de leur corps est, selon l'invention, du type à mors maintenus constamment parallèles entre eux et prévue pour la pose d'étiquettes souples formées, au moment de la mise en place, de deux parties, l'une dite mâle, l'autre dite femelle et solidarisées par l'intermédiaire d'une pièce auxiliaire conique dure indépendante. Elle est essentiellement caractérisée, d'une part, par le fait que le mors de réception de la partie mâle de l'étiquette comporte: une masselotte porte-tige rigide de support de la partie mâle de l'étiquette, articulée près de l'extrémité antérieure du mors autour d'un axe parallèle à l'axe d'articulation dudit mors sur la branche correspondante de la pince, l'axe d'articulation dudit mors étant disposé près de l'extrémité libre antérieure de cette branche, tandis que la tige formant guide rigide est disposée en arrière de l'axe d'articulation de la masselotte, la rotation de ladite masselotte ayant une amplitude de 90° comprise entre deux positions extrêmes, la position de repli, occupée pendant la pose de l'étiquette, étant celle dans laquelle elle se trouve placée dans un logement de réception formé par un évidement ménagé dans ledit mors, le plateau de réception de la face extérieure de l'étiquette portée par ladite masselotte étant alors coplanaire à la face intérieure du mors et la position de déploiement et de libération de l'étiquette posée et, d'autre part, par le fait que le second mors comporte un évidement de réception de la partie femelle de l'étiquette ouvert sur l'extrémité libre antérieure du mors et un canal de réception de la pièce conique auxiliaire de mise en place et de solidarisation entre elles des deux parties de l'étiquette, ledit canal étant coaxial à la tige rigide portée par le premier mors lorsque la masselotte est en position de repli.

De manière avantageuse, le canal de réception de la pièce conique auxiliaire, ménagé sur le second mors est muni intérieurement d'une rondelle épaisse dont la section intérieure possède une forme la rendant élastique et telle qu'elle permette le passage d'une pièce conique auxiliaire vers l'extérieur sans en permettre le retour en arrière.

Suivant une première forme de réalisation, le canal de réception de pièces coniques auxiliaires dépasse vers l'extérieur du mors correspondant et son extrémité est munie d'un organe de réception et d'adaptation d'un récipient amovible de récupération desdites pièces coniques.

Suivant une seconde forme de réalisation du dispositif de récupération des pièces coniques, la face latérale extérieure du second mors comporte une glissière à rainure dans laquelle peut coulisser un boîtier amovible de récupération des pièces coniques auxiliaires ouvert du côté en contact avec ladite face latérale et pouvant être amené par coulissement en regard de l'extrémité du canal de réception desdites pièces coniques.

En vue d'accroître la sécurité d'emploi de la pince, le fond de l'évidement de réception de la masselotte articulée du porte-tige rigide du premier mors est muni d'un organe de retenue de ladite masselotte en position de repli à résistance à l'arrachement limitée à une valeur prédéterminée.

Suivant une première forme de réalisation, l'organe de retenue de la masselotte articulée porte-tige rigide est constitué par un ressort du type dit "circlips".

Suivant une seconde forme de réalisation, l'organe de retenue de la masselotte en position de repli est constitué par un verrouillage à aimant permanent.

Les caractéristiques et avantages de l'invention ressortiront mieux de la description faite ci-après en regard des dessins annexés sur lesquels:

la figure 1 représente une vue générale de la pince selon l'invention;

la figure 2 représente une vue du mors porte-masselotte articulée munie de la tige-guide porte partie mâle de l'étiquette en position d'extension de la masselotte;

la figure 3 représente une vue du mors porte-masselotte articulée en position de repli de la masselotte;

la figure 4 représente une vue du mors porte-masselotte dans une position intermédiaire entre les deux positions extrêmes;

la figure 5 représente une vue du second mors de la pièce selon l'invention; et

la figure 6 représente une vue en coupe transversale du canal de réception des cônes auxiliaires de mise en place.

Sur ces figures, les mêmes références représentent les mêmes éléments.

En se référant aux différentes figures, une pince à mors maintenus constamment parallèles, entre eux, comporte deux branches 1 et 2 articulées autour d'un axe de rotation 3 commun et dont les extrémités utiles de chacune d'elles sont terminées par un mors 1a, 2a, chacun des deux dits mors étant articulé en rotation autour d'un axe 3a, 3b fixe par rapport à la branche correspondante et parallèle à l'axe de rotation commun aux branches 1 et 2. Un dispositif de type connu permet également de démultiplier le mouvement de rapprochement des deux branches, lorsque celui-ci est transmis aux deux mors correspondants en vue de les rapprocher. En outre, ce dispositif, de manière connue, est tel que le mouvement de serrage exercé sur les branches de la pince a pour effet de rapprocher les deux mors l'un de l'autre de manière qu'ils restent constamment parallèles entre eux.

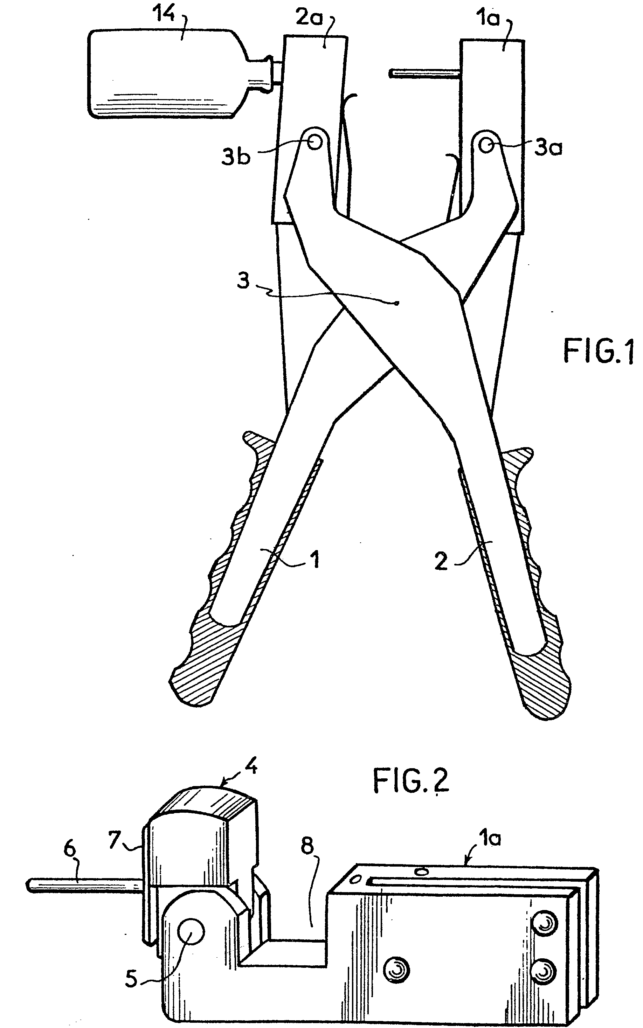

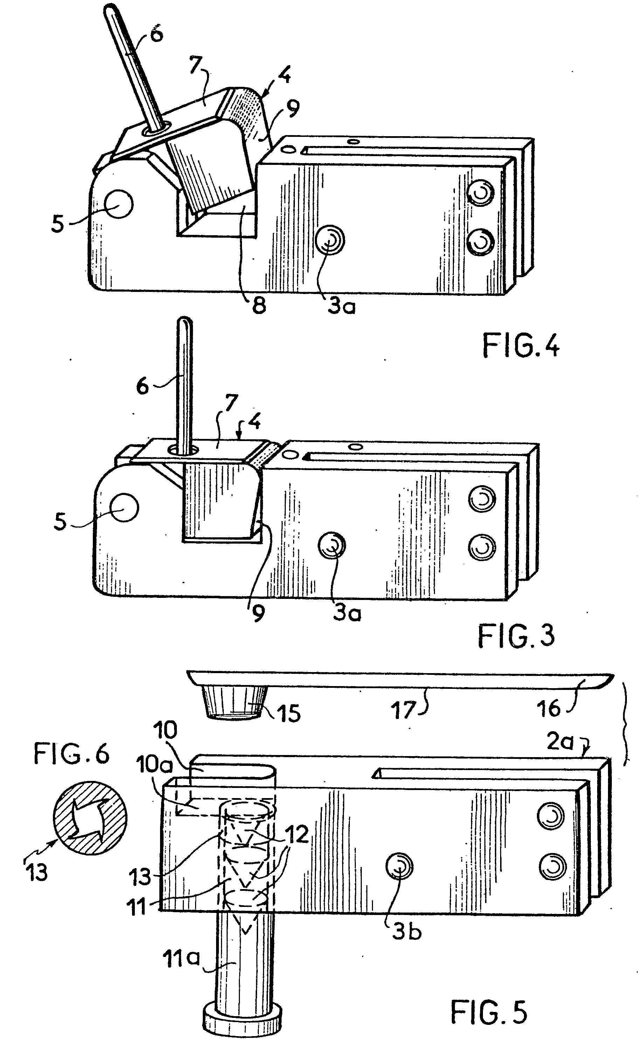

La pince de marquage selon l'invention est, comme la pince dont on vient de rappeler les caractéristiques, une pince comportant les mors 1a et 2a maintenus constamment parallèles entre eux et articulés respectivement autour des axes 3a et 3b. Comme représenté sur les figures 2, 3 et 4, le mors 1a qui peut être rendu amovible et peut, par suite, être facilement remplacé en cas de besoin, comporte une masselotte 4 articulée en rotation sur l'axe 5, parallèle à la fois à l'axe d'articulation 3a du mors 1 et à l'axe d'articulation 3 des branches 1 et 2 de la pince. La masselotte 4 comporte une tige rigide 6 rectiligne d'axe perpendiculaire au plan de sa face 7 placée, dans la position repliée représentée plus particulièrement sur la figure 3, du côte intérieur de la pince. Un évidement 8, de contour quasi rectangulaire, est ménagé dans le corps du mors pour recevoir la masselotte dans sa position repliée, position dans laquelle la face 7 se trouve dans le même plan que le reste de la face intérieure du mors 1a. L'axe de rotation 5 est disposé du côté de l'extrémité libre du mors tandis que l'axe longitudinal de la tige rigide 6, orthogonal à l'axe 5, se trouve en position excentrée par rapport à ce dernier de manière qu'en position repliée de la masselotte, il se trouve plus éloigné de l'extrémité libre du mors que ledit axe 5. Par ailleurs, la face arrière 9, c'est-à-dire opposée à la face libre d'extrémité, est conformée de manière que, d'une part, au niveau de la face 7 elle se trouve appuyée sur l'arête supérieure de la cavité et que, d'autre part, aucun de ses points ne puisse avoir au cours de sa rotation autour de l'axe 5 un contact avec la face en vis-à-vis de ladite cavité, susceptible de gêner cette rotation.

Comme représenté sur la figure 5, le mors 2a, opposé au mors 1 et qui peut, comme lui, être amovible, comporte un évidement 10, ouvert sur sa face libre d'extrémité, dont la largeur est égale au diamètre de base de la pointe conique auxiliaire de mise en place de l'étiquette et dont le fond est de forme semi-circulaire et de diamètre égal à ladite largeur. La base 10a de l'évidement 10, dans sa partie placée au fond, forme le début d'un canal cylindrique 11 dont le diamètre intérieur est égal au diamètre de la base d'une pointe conique auxiliaire 12 de mise en place de l'étiquette. Ce canal cylindrique, qui est coaxial à la tige rigide 6 quand la masselotte est en position de repli et dont la partie comprise entre la base 10a de l'évidement et la face extérieure du mors 2a est creusée dans la masse dudit mors, peut être prolongé extérieurement par un tube cylindrique 11a de même diamètre intérieur et rapporté sur ledit mors par tout moyen connu approprié, par exemple par soudure. L'entrée du canal 11, c'est-à-dire à son extrémité qui part de la base 10a de l'évidement 10, est revêtue intérieurement d'une rondelle ou d'un manchon 13 de faible hauteur réalisée en une matière souple et élastique telle que, par exemple, du polyuréthane dont la section intérieure présente une forme lui permettant de se dilater sous l'effet d'une pression exercée depuis l'intérieur et de reprendre sa forme primitive après suppression de cette pression; la forme de cette section peut être, par exemple, celle représentée sur la figure 6, à titre d'exemple non limitatif, c'est-à-dire formée d'une succession de stries.

L'extrémité du canal 11a peut comporter à son extrémité tout organe approprié pour la mise en place d'un récipient tel que celui représenté en 14 sur la figure 1 et qui permet la récupération des pointes coniques emmagasinées dans le canal au fur et à mesure des différentes mises en place d'étiquettes, un tel organe pouvant être constitué par un simple dispositif à vis. Ce dispositif de récupération des pointes coniques qui peut avantageusement être réalisé en une matière transparente peut être également constitué par un boîtier de forme parallélépipédique dont une face limitée, par exemple, par un plus grand et un plus petit côté comporte un orifice de contour au moins égal à celui du canal 11 et pouvant être amenée en regard de ce dernier, ladite face comportant à cet effet sur les côtés longitudinaux une glissière pouvant coopérer avec des rainures ménagées à cet effet sur la face extérieure latérale du mors 2a, pour la mise en place dudit boîtier sur le mors.

Il peut y avoir intérêt à ce que la rotation de la masselotte 4 autour de son axe 5 ne puisse s'effectuer trop facilement et ne le faire que lorsque l'ensemble formé par la masselotte 4 et la tige rigide 6 est soumis à un couple atteignant une valeur prédéterminée. Pour obtenir ce résultat, on peut, par exemple, disposer au fond de l'évidement, un aimant permanent coopérant directement avec la masselotte si celle-ci est réalisée en un métal magnétique ou indirectement au moyen d'une plaquette de métal magnétique rapportée sur sa face opposée à la face 7 et réalisée en un métal magnétique. Il est encore possible, pour obtenir ce résultat, de munir la base de l'évidement 8 d'un ressort par exemple de type "Circlips" disposé dans un petit orifice ménagé dans cette dernière et coopérant avec la tige correspondante placée sur la face de la masselotte opposée à sa face 7.

La pince de marquage ci-dessus décrite fonctionne alors de la manière suivante. La partie dite mâle de l'étiquette souple à mettre en place sur l'oreille d'un animal est placée sur le premier mors 1a, sa face, devant apparaître après la pose du côté de l'extérieur, étant placée contre la face 7 de la masselotte en position repliée et la tige à mettre en place dans la partie femelle étant enfilée sur la tige rigide 6, tandis que l'organe de réception 15 de la partie femelle 16 est disposé dans le fond de l'évidement 10 en regard du canal 11, la face 17 de ladite partie femelle placée du même côté que l'organe de forme légèrement tronconique de réception 15 et qui doit être dirigée vers l'extérieur une fois posée et de ce fait porte la marque, étant appliquée contre la face intérieure du mors 2a. Ces mises en place étant exécutées, une pointe conique 12 est mise en place dans l'organe de réception 15, sa pointe étant tournée du côté du canal cylindrique 11, puis l'oreille de l'animal placée entre les deux mors. La fermeture des mors obtenue par rapprochement des branches 1 et 2 de la pince a pour effet d'amener l'extrémité de la tige rigide et de l'axe de l'étiquette mâle en appui contre la base de la pointe conique puis de pousser celle-ci à travers l'organe de réception 15 de la partie femelle de l'étiquette en le dilatant radialement lors de son passage, puis de l'en éjecter dans le canal 11. Cette pointe conique pousse alors la pointe conique précédemment poussée dans le canal 11 et maintenue dans le manchon 13 jusqu'à ce qu'au cours de l'opération suivante de marquage elle soit à son tour repoussée plus loin, la forme de la section intérieure du manchon 13 rendant par ailleurs impossible tout retour en arrière d'une pointe conique ayant pénétré dans le canal 11 au-delà dudit manchon.

Périodiquement, le récipient ou le boîtier 14 est retiré de son support, pour récupération et réutilisation ultérieure des pointes coniques.

Le fait que la tige rigide de réception de l'axe reliant les deux parties de l'étiquette est excentrée par rapport à l'axe de rotation de la masselotte, permet d'éviter que l'animal libère l'étiquette avant que ses deux parties soient parfaitement emboîtées l'une dans l'autre, car tant que l'opérateur exerce une pression sur les deux branches de la pince il est impossible à la masselotte de pivoter. Lorsque l'opérateur relâche sa pression sur les branches de la pince une fois l'opération terminée, que les deux mors s'écartent l'un de l'autre tout en restant parallèles, et que l'animal réagit en tentant de se soustraire à l'opération, la traction que son oreille exerce sur la tige rigide encore revêtue de l'axe de solidarisation des deux parties de l'étiquette fait pivoter la masselotte autour de son axe de rotation, amenant ladite masselotte dans la position représentée à la figure 2, après être passée par la position intermédiaire telle que représentée à la figure 4, si bien que l'animal dégage l'étiquette hors de la pince par son propre effort en faisant glisser vers l'extérieur et hors de la tige rigide l'axe joignant les deux parties de l'étiquette, et cela, sans qu'il en résulte de déchirure à l'oreille de l'animal, la pince restant alors entre les mains de l'opérateur au lieu d'être emportée par l'oreille de l'animal comme le fait se produit parfois avec les pinces de marquage déjà connues.

Il est bien entendu que la présente invention n'a· été décrite et représentée qu'à titre d'exemple préférentiel et qu'on pourra apporter à ses éléments constitutifs des équivalences techniques, sans pour autant sortir du cadre de ladite invention tel que ci-après revendiqué.

**Revendications**

1. Pince de marquage d'animaux par étiquettes implantées dans une région cartilagineuse de leur corps, du type à mors (1a, 2a) maintenus constamment parallèles entre eux, prévue pour la pose d'étiquettes souples formées au moment de leur mise en place de deux parties l'une dite mâle, l'autre dite femelle (16) et solidarisées par l'intermédiaire d'une pièce auxiliaire conique (12) due indépendante, caractérisée, d'une part, par le fait que le mors (1a) de réception de la partie mâle de l'étiquette comporte: une masselotte (4) porte-tige rigide, de support de la partie mâle de l'étiquette, articulée près de l'extrémité antérieure du mors autour d'un axe (5) parallèle à l'axe d'articulation dudit mors sur la branche (1) correspondante de la pince, l'axe (3a) d'articulation dudit mors étant disposé près de l'extrémité libre antérieure de cette branche, tandis que la tige (6) formant guide rigide est disposée en arrière de l'axe d'articulation de la masselotte, la rotation de ladite masselotte ayant une amplitude de 90° comprise entre deux positions extrêmes, la position de repli, occupée pendant la pose de l'étiquette, étant celle dans laquelle elle se trouve placée dans un logement de réception formé par un évidement (8) ménagé dans ledit mors, le plateau (7) de réception de la face extérieure de l'étiquette porté par ladite masselotte étant alors coplanaire à la face intérieure du mors, et la position de déploiement et de libération de l'étiquette posée, et d'autre part, par le fait que le second mors (2a) comporte un évidement (10) de réception de la partie femelle de l'étiquette ouvert sur l'extrémité libre antérieure du mors et un canal (11) de réception de la pièce conique auxiliaire (12) de mise en place et de solidarisation entre elles des deux parties de l'étiquette, ledit canal (11) étant coaxial à la tige rigide (6) portée par le premier mors lorsque la masselotte est en position de repli.

2. Pince de marquage selon la revendication 1, caractérisée par le fait que le canal de réception (11) de la pièce conique auxiliaire (12) ménagé sur le second mors (2a) est muni intérieurement d'une rondelle épaisse (13) dont la section intérieure possède une forme la rendant élastique et telle qu'elle permette le passage d'une pièce conique auxiliaire (12) vers l'extérieure sans en permettre le retour en arrière.

3. Pince de marquage selon l'une quelconque des revendications 1 ou 2, caractérisée par le fait que le canal de réception (11) de pièces coniques auxiliaires (12) dépasse vers l'extérieur du mors (2a) correspondant et que son extrémité est munie d'un organe d'adaptation et de réception d'un récipient amovible (14) de récupération desdites pièces coniques (12).

4. Pince de marquage selon l'une quelconque des revendications 1 ou 2, caractérisée par le fait que la face latérale extérieure du second mors (2a) comporte une glissière à rainure dans laquelle peut coulisser un boîtier amovible de récupération des pièces coniques auxiliaires (12) ouvert du côté en contact avec ladite face latérale et pouvant être amené par coulissement en regard de l'extrémité du canal de réception (11) desdites pièces coniques.

5. Pince de marquage selon l'une quelconque des revendications 1, 2, 3 ou 4, caractérisée par le fait que le fond de l'évidement (8) de réception de la masselotte articulée (4) du porte-tige rigide (6) du premier mors (1a) est munie d'un organe de retenue de ladite masselotte en position de repli à résistance à l'arrachement limitée à une valeur prédéterminée.

6. Pince de marquage selon la revendication 5, caractérisée par le fait que l'organe de retenue de la masselotte (4) articulée porte-tige (6) est constitué par un ressort de type dit "circlips".

7. Pince de marquage selon la revendication 5, caractérisée par le fait que l'organe de retenue de la masselotte (4) en position de repli est constitué par un verrouillage à aimant permanent.

**Patentansprüche**

1. Zange zum Markieren von Tieren durch in einen verknorpelten Bereich ihres Körpers eingesetzte Etiketten, mit dauernd zueinander parallel gehaltenen Backen (1a, 2a), welche zum Einsetzen der beigsamen Etiketten vorgesehen ist, die beim Einsetzen an Ort und Stelle aus zwei Teilen, nämlich einem Zapfen- und einem Hülsenteil (16) gebildet und mit Hilfe eines harten, unabhängigen konischen Hilfsstückes (12) vereinigt werden, dadurch gekennzeichnet, daß die zur Aufnahme des Zapfenteils des Etiketts bestimmte Backe (1a) einen einen starren Dorn tragenden Klotz (4) zum Abstützen des Zapfenteils des Etiketts umfaßt, welcher in der Nähe des vorderen Endes der Backe um eine zur Anlenkachse der Backe an dem entsprechen Schenkel (1) der Zange parallele Achse (5) gelenkig angebracht ist, wobei die Gelenkachse (3a) der Backe in der Nähe des vorderen freien Endes des Schenkels angeordnet ist, während der eine starre Führung bildende Dorn (6) hinter der Gelenkachse (5) des Klotzes angeordnet ist, der Klotz einen Drehwinkel von 90° zwischen seinen Extremlagen besitzt, nämlich der Aufnahmelage, die während des Einsetzens des Etiketts eingenommen wird, in der sich der Klotz in einer durch einen in der Backe angebrachten Ausschnitt (8) gebildeten Aufnahme befindet und sich die Anlagefläche (7) für die Außenseite des durch den Klotz gehaltenen Etiketts in einer Ebene mit der Innenfläche der Backe befindet, und der Gebrauchs- und Freigabelage für das eingesetzte Etikett, und daß die zweite Backe (2a) einen zur freien Vorderseite der Backe hin offenen Ausschnitt (10) zur Aufnahme des Hülsenteils des Etiketts sowie einen Aufnahmekanal (11) für das konische Hilfsteil (12) zum Einsetzen und zur Vereinigung der beiden Etikett-Teile aufweist, wobei dieser Kanal (11) koaxial mit dem durch die erste Backe getragenen starren Dorn (6) bei in Aufnahmelage befindlichem Klotz angeordnet ist.

2. Markierungszange nach Anspruch 1, dadurch gekennzeichnet, daß der in der zweiten Backe (2a) befindliche Aufnahmekanal (11) für das konische Hilfsstück (12) in seinem Inneren mit einer ringförmigen Verdickung (13) versehen ist, deren Innenabschnitt eine sie elastisch machende Form besitzt und den Durchtritt eines konischen Hilfsstückes (12) nach außen zuläßt, ohne eine Rückkehr zu gestatten.

3. Markierungszange nach einem der Ansprüche 1 oder 2, dadurch gekennzeichnet, daß der Aufnahmekanal (11) für die konischen Hilfsstücke (12) bis zur Außenseite der entsprechenden Backe (2a) reicht und an seinem Auslaß mit einem Anpaßteil zur Aufnahme eines abnehmbaren Behälters (14) zur Rückgewinnung der konischen Hilfsstücke (12) versehen ist.

4. Markierungszange nach einem der Ansprüche 1 oder 2, dadurch gekennzeichnet, daß die äußere Seitenfläche der zweiten Backe (2a) eine Nuten-Gleitbahn enthält, in welche das Einschieben eines entfernbaren Behälters zur Wiedergewinnung der konischen Hilfsstücke (12) möglich ist, der zur in Berührung mit der Seitenfläche stehenden Seite hin offen und zum Einschieben bezüglich des Endes des Aufnahmekanals (11) der konischen Hilfsstücke ausgelegt ist.

5. Markierungszange nach einem der Ansprüche 1 bis 4, dadurch gekennzeichnet, daß der Boden des Aufnahmeausschnittes (8) für den gelenkig angebrachten, mit einem starren Dorn (6) versehenen Klotz (4) in der ersten Backe (1a) mit einer Halteeinrichtung für den Klotz in der Aufnahmelage versehen ist, die einen auf einen vorbestimmten Wert begrenzten Abreißwiderstand besitzt.

6. Markierungszange nach Anspruch 5, dadurch gekennzeichnet, daß die Halteeinrichtung für den gelenkig angebrachten und einen Dorn (6) tragenden Klotz (4) durch eine Feder der "Circlips" genannten Art gebildet ist.

7. Markierungszange nach Anspruch 5, dadurch gekennzeichnet, daß die Halteeinrichtung zum Halten des Klotzes (4) in der Aufnahmelage durch einen Parmanentmagnet-Verschluß gebildet ist.

### Claims

1. A pair of pliers for marking animals, by tags implanted in a cartilaginous region of their body, of the type having jaws 1a, 2a maintained constantly parallel to one another, and provided for application of supple tags consisting, at the time of their positioning, of two portions, one of them being a male portion and the other a female portion 16, and both being united through an auxiliary conical hard independent piece 12, characterized in that jaw 1a for receiving the male portion of the tag comprises a rod-carrying rigid mass 4 to support the male portion of the tag and pivotable adjacent the forward end of the jaw about an axis 5 parallel to the pivoting axis of said jaw on the corresponding branch 1 of the pliers, the pivoting axis 3a of said jaw being disposed adjacent the free forward end of said branch, whereas the rigid guiding rod 6 is disposed rearwardly of the pivoting axis of the mass, the rotation of said mass being of an amplitude of 90° comprised between two end positions, the retracted position, occurring during the application of the tag being that in which it is placed in a reception housing formed by a recess 8 provided in said jaw, the reception plate 7 for receiving the outer face of the tag and carried by said mass being then coplanar to the inner face of the jaw, and the position of extension and release of the mounted tag, on the one hand, and on the other hand, in that the second jaw 2a is formed with a recess 10 for receiving the female portion of the tag, said recess 10 being open to the free forward end of the jaw, and a channel 11 for receiving the auxiliary conical piece 12 for placing and securing to one another both portions of the tag; said channel 11 being coaxial with the rigid rod 6 carried by the first jaw when the mass is in its retracted position.

2. Marking pliers according to claim 1, characterized in that the channel 11 for receiving the auxiliary conical piece 12, which is formed on the second jaw 2a, is provided inwardly with a thick washer 13, the inner section of which has such a configuration as to render it elastic and permit the passage therethrough of an auxiliary conical piece 12 to the outside, without permitting return movement thereof.

3. Marking pliers according to any of claims 1 or 2, characterized in that the channel 11 for receiving auxiliary conical pieces 12 projects outwardly from the corresponding jaw 2a and in that its end is provided with a member for accommodating and receiving a removable container 14 for recovery of said conical pieces 12.

4. Marking pliers according to any of claims 1 or 2, characterized in that the outward lateral face of the second jaw 2a comprises a grooved slide, in which a removable housing can slide, for recovering auxiliary conical pieces 12, and open to the side engaging said lateral face, said removable housing being slidably movable opposite the end of the reception channel 11 for said conical pieces.

5. Marking pliers according to any of claims 1, 2, 3 or 4, characterized in that the bottom of the recess 8 for receiving the pivotable mass 4 of the rigid rod-carrying member 6 of the first jaw 1a is provided with a member for holding said mass in the retracted position with the shearing strength thereof being limited to a predetermined value.

6. Marking pliers according to claim 5, characterized in that the member for holding the pivotable rod 6 carrying mass 4 consists of a spring of the so-called "circlips" type.

7. Marking pliers according to claim 5, characterized in that the member for holding the mass 4 in the retracted position consists of a permanent magnet locking means.

0 004 221

FIG.1

FIG.2

0 004 221

FIG.4

FIG.3

FIG.6

FIG.5

2